# EUROPEAN PATENT APPLICATION

(11) **EP 4 797 199 A1**
(43) Date of publication of application: **26.08.2026**
(21) Application number: 25219000.4
(22) Date of filing: 27.11.2025
(51) Int. Cl.: G06T 5/50, G06T 5/70

(54) **RADIOMETRIC COMPENSATION FOR TEMPORAL NOISE REDUCTION IN VIDEO**

(30) Priority: 19.02.2025 US 202519057230
(71) Applicant: INTEL Corporation, Santa Clara, CA 95054 (US)
(72) Inventor: ELRON, Noam, 6813657 Tel Aviv (IL)
(74) Representative: Viering, Jentschura & Partner mbB Patent- und Rechtsanwälte

(57) **Abstract**

Systems and methods for providing a temporal noise reducer (TNR) architecture that improves TNR performance by adjusting for lighting differences between image frames. Temporal noise reduction is a core feature of a video processing pipeline, where TNR can be used to decrease noise in video streams. Some TNRs compensate for the motion of objects between frames, but lighting changes can also lead to additional noise. As an object's position moves from frame to frame, the lighting of the object may change. A lightweight tone-mapping and color-correction operator is added to the TNR feedback loop, matching the radiometric properties of a TNR reference frame to the radiometric properties of the current frame to compensate for radiometric differences, thereby increasing the effectiveness of TNR in handling incremental lighting changes and speeding up its response to abrupt lighting changes.

## Description

### Technical Field

This disclosure relates generally to temporal noise reduction, and in particular to radiometric compensation for temporal noise reduction.

### Background

Temporal noise reduction can be used to decrease noise in video streams. Noisy video image streams can appear jittery. While image portions with static objects can be averaged over time, averaging moving objects can result in a smearing and/or ghosting effect. Temporal noise reducers can incorporate a classifier that determines whether information can or cannot be averaged. In particular, a temporal noise reduction (TNR) classifier can determine which portions of video images can be averaged for temporal noise reduction, and which portions of video images cannot be averaged. TNR can include a motion analysis step to identify the moving elements and a blending step to blend the current input image with the previous temporally-denoised frame.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 is a block diagram of an example temporal noise reduction system with feedback, in accordance with various embodiments.
FIG. 2 illustrates an example of a piece-wise linear gain function, in accordance with various embodiments.
FIG. 3 illustrates an example of piece-wise linear chroma transform, in accordance with various embodiments.
FIGS. 4A and 4B illustrate temporal denoising in response to a change in brightness using a TNR without radiometric compensation and using TNR with radiometric compensation, in accordance with various embodiments.
FIG. 5 is a flowchart showing a method for temporal noise reduction of images with radiometric compensation, in accordance with various embodiments.
FIG. 6 is a block diagram of an example DNN system, in accordance with various embodiments.
FIG. 7 is a block diagram of an example computing device, in accordance with various embodiments.

### Detailed Description

### Overview

Temporal noise reduction is a core feature of a video processing pipeline, where TNR can be used to decrease noise in video streams. In particular, information from consecutive input frames can be used to produce a superior output frame. Temporal noise reducers (TNRs) can incorporate a classifier that determines which portions of video images can be averaged for temporal noise reduction, and which portions of video images cannot be averaged. In a static scene, each pixel in the captured image can be represented as a combination of the true pixel value (P) and the additive noise (*noise*)*.* The relationship can be defined as follows: ${P}_{noisy x , y} \left[n\right] = {P}_{x , y} \left[n\right] + {noise}_{x , y} \left[n\right]$

Here, *P_{noisy}* represents the pixel as captured by the sensor, P represents the actual pixel value, and *noise* symbolizes the additional noise affecting each pixel. In general, noise reduction techniques identify noise that possesses characteristics such as a zero mean and the noise remains independent of time. Aggregating multiple such noisy pixels allows for an improved approximation of the clean pixel value at a TNR.

TNR generally includes two main steps: motion analysis and blending. Motion analysis includes identifying moving elements, and can include generating a dense motion map. Blending includes blending the current input image frame with the previous temporally-denoised frame. By performing weighted averaging of the noisy input and the temporal feedback information, TNR significantly reduces the noise level. In some examples, the motion analysis step includes generating a dense motion map, and the blending step is performed on an aligned image. That is, if the current image frame is shifted slightly from the previous frame, the corresponding pixels from the current image frame and the previous frame can be aligned using the dense motion map. In some examples, such as when there is no dense motion map, the blending step includes blending static pixels.

Dynamic environments can exhibit incremental changes in the scene which make temporal noise reduction less effective. While many TNRs compensate for the motion of objects between frames (motion-compensated temporal noise reduction), lighting changes can also lead to additional noise. For example, in video of moving car, along with the car movement from its location in a first frame to its location in a second frame, the lighting of the car may change, for example, as the car moves from a shadow toward sunlight, making the car brighter, more vibrant, and/or changing the tone of the car.

Systems and methods are provided herein for compensating for radiometric differences between frames (*i.e.,* objects appearing brighter or darker and/or having a different hue). Radiometric differences can occur when lighting conditions change, either abruptly (e.g., flicking a light-switch, using a camera flash, etc.) or incrementally (e.g., due to camera motion relative to the light source, as in a car-dashboard camera).

A TNR generally includes a feedback loop, such that the current frame is processed along with the TNR output for the previous frame. In some embodiments, a lightweight tone-mapping and color-correction operator is added to the TNR feedback loop. The tone-mapping and color-correction operator can be used in compensating for radiometric differences. In some implementations, the tone-mapping and color-correction operator matches the radiometric properties of the TNR reference frame to the radiometric properties of the current frame.

In various embodiments, the systems and method provided herein, including adding the tone-mapping and color-correction operator to the TNR feedback loop, increases the effectiveness of TNR in handling incremental lighting changes and speeds up its response to abrupt changes. Additionally, the system is cost-effective to implement, adds minimally to the die area for the TNR, and is energy-efficient, consuming minimal power. Furthermore, the system is backwards compatible with existing TNRs.

For purposes of explanation, specific numbers, materials, and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A and/or B" or the phrase "A or B" means (A), (B), or (A and B). For the purposes of the present disclosure, the phrase "A, B, and/or C" or the phrase "A, B, or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the input operand of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the input operand of a particular value as described herein or as known in the art.

In addition, the terms "comprise," "comprising," "include," "including," "have," "having" or any other variation thereof, are intended to cover a non-exclusive inclusion. For example, a method, process, device, or system that comprises a list of elements is not necessarily limited to only those elements but may include other elements not expressly listed or inherent to such method, process, device, or systems. Also, the term "or" refers to an inclusive "or" and not to an exclusive "or."

The systems, methods, and devices of this disclosure each have several innovative aspects, no single one of which is solely responsible for all desirable attributes disclosed herein. Details of one or more implementations of the subject matter described in this specification are set forth in the description below and the accompanying drawings.

### Example TNR System with Radiometric Compensation

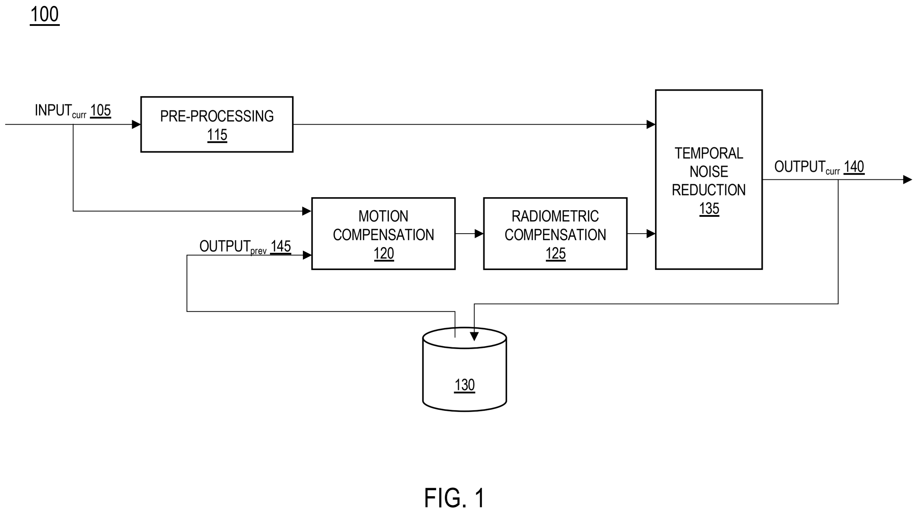

FIG. 1 is a block diagram of an example temporal noise reduction system 100 with feedback, in accordance with various embodiments. The temporal noise reduction system 100 includes an imaging pipe 115 and a TNR 135. A raw image 105 is received at the imaging pipe 115, and the output from the imaging pipe 115 is input to the TNR 135. The TNR 135 also receives a processed output from the previous frame. The TNR 135 performs noise reduction on the pre-processed image output from the imaging pipe 115 using the processed output for the previous frame, and outputs a reduced noise image 140 (OUTPUT_{curr}).

The TNR output for the previous frame (OUTPUTₚᵣₑᵥ 145) is stored in a memory 130 and is fed into a second pipe of the processing pipeline, for processing and input to the TNR 135 along with the raw image 105. In particular, the TNR output for the previous frame (OUTPUTₚᵣₑᵥ 145) is retrieved from the memory 130 and input to a Motion Compensation module 120 for motion analysis and compensation and Radiometric Compensation module 125 for radiometric analysis and compensation.

Thus, in the temporal noise-reduction (TNR) system 100 with feedback, the output of the previous frame 145 is stored in memory and re-fed into the processing pipeline together with the current input frame 105. For each pixel, the output is a blend of the current input and the previous output:${OUTPUT}_{curr} \left(y, x\right) = a \left(y, x\right) ⋅ {OUTPUT}_{prev} \left(y, x\right) + \left(1-a\left(y, x\right)\right) ⋅ {INPUT}_{curr} \left(y, x\right)$

where the local blend ratio α(y, x) depends on the similarity between the previous output (a.k.a. the reference-frame) and the current input. In particular, in regions where the previous output 145 frame contains visual information that is similar to the current frame 105, we can blend the previous output 145 frame and the current frame 105, producing an image that represents the current view but with lower noise levels. In regions where the previous output 145 frame is dissimilar to the current frame 105 (e.g., due to the motion of an object), the previous output 145 frame no longer represents the current view and the previous output 145 frame and the current frame 105 are not blended.

In image regions where the previous output 145 frame and the current frame 105 are similar, the local blend ratio α(y, x) is high, resulting in effective noise-reduction. In image regions where the previous output 145 frame and the current frame 105 are dissimilar, the local blend ratio α(y, x) ≈ 0. Setting the local blend ratio to approximately zero in areas where the previous output 145 frame and the current frame 105 are dissimilar prevents visible artifacts in the output video stream. However, setting the local blend ratio to approximately zero prevents application of temporal noise reduction.

To allow for increased application of temporal noise reduction, the TNR system 100 with feedback applies manipulations on the previous output (*i.e.,* OUTPUTₚᵣₑᵥ ) so that it becomes become more similar to the current input (*i.e.,* INPUT_{curr}). The manipulations applied to the previous output allow for maintaining a higher blend ratio α(y, x) throughout a larger portion of the video stream, greatly increasing TNR effectiveness. In particular, the TNR system 100 includes a Motion Compensation (MC) module 120, which warps the previous output 145 (*i.e.,* OUTPUTₚᵣₑᵥ) such that moving objects in the previous output frame 145 are geometrically aligned with their current location in the scene. Additionally, the TNR 100 includes a Radiometric Compensation module 125 designed to reduce radiometric differences between consecutive frames. In particular, the Radiometric Compensation module 125 can adjust for changes in lighting of the moving object, including tint, hue, and brightness changes. In various examples, the Radiometric Compensation module 125 can adjust for changes in luminance and chrominance.

In some implementations, one form of radiometric compensation is a per-pixel operation, *i.e.,* an operator that is applied to each pixel of the previous output 140 (*i.e.,* OUTPUTₚᵣₑᵥ) independently, transforming each pixel of the previous output 140 based on its value and a set of parameters *P* that are uniform throughout the frame (independent of the pixel's location or the semantic content). ${OUTPUT}_{prev}^{comp} \left(y, x\right) = {f}_{p} \left({OUTPUT}_{prev}\left(y, x\right)\right)$

In some examples, the transformation *f_{P}* can be defined in the color-space in which the TNR 135 operates. For color-spaces in which luminosity is separate from other components (*e.g*., YUV, HSL, etc.), the radiometric compensation operation can be separated into two parts. The first part is an input-dependent tone-mapping of the luminosity channel, where the luminosity channel represents brightness. The input-dependent tone-mapping of the luminosity channel can be represented by the following equation: ${Y}^{out} = {g}_{P 1} \left({Y}^{in}\right) ⋅ {Y}^{in}$

The second part is a luminosity-dependent color-correction on the chroma channels. In general, the chroma channels convey the color information of the image. Chrominance can be represented using two color difference components (U and V), each of which can have different scale factor and offsets. The luminosity-dependent color-correction on the chroma channels can be represented by the following equation: $\left[\begin{matrix}{U}^{out} \\ {V}^{out}\end{matrix}\right] = {C}_{P 2} \left({Y}^{in}\right) ⋅ \left[\begin{matrix}{U}^{in} \\ {V}^{in}\end{matrix}\right]$

where *C_{P2}(Yⁱⁿ)* is a 2 × 2 matrix dependent on the input luminosity *Y* and the parameters *P2.* In some implementations, operators *g_{P1}* and *C_{P2}* can be piecewise-linear in *Y.* When the operators *g_{P1}* and *C_{P2}* are piecewise-linear in *Y,* there is ample flexibility while the real-time calculation hardware is simple and lightweight. In particular, the real-time calculation hardware has a small die area and low power consumption. Additionally, when the operators *g_{P1}* and *C_{P2}* are piecewise-linear in *Y,* the parameter space *P={P1,P2}* is small and easily manageable.

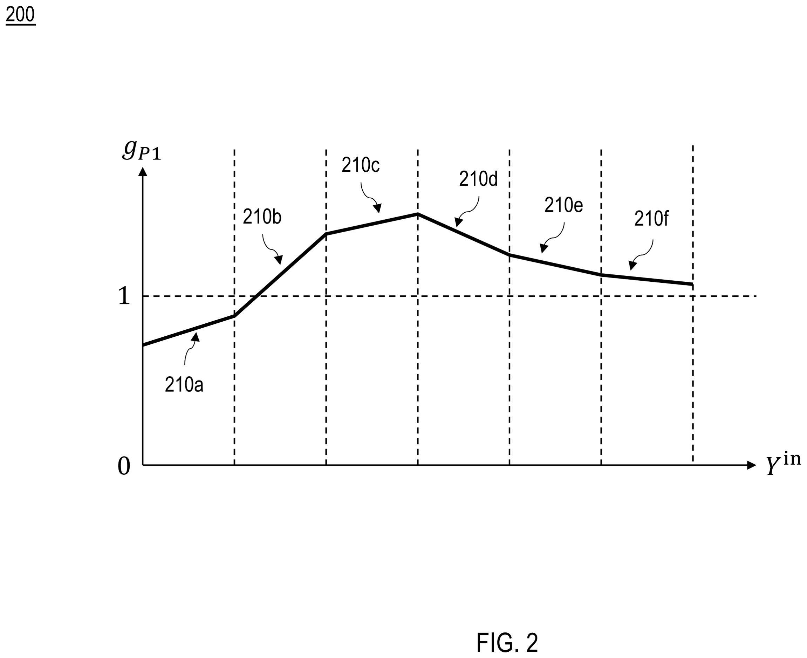

FIG. 2 illustrates an example of a piece-wise linear gain function *g_{P1},* in accordance with various embodiments. In particular, the horizontal axis shows the input luminosity *Yⁱⁿ,* and the vertical axis shows the gain function *g*_{*P*1}. As shown in FIG. 2, the calibration parameters *P*1 are the parameters of the individual line segments 210a-210f. Thus, each of the individual line segments 210a-210f represents a piece of the piecewise-linear gain in *Y.*

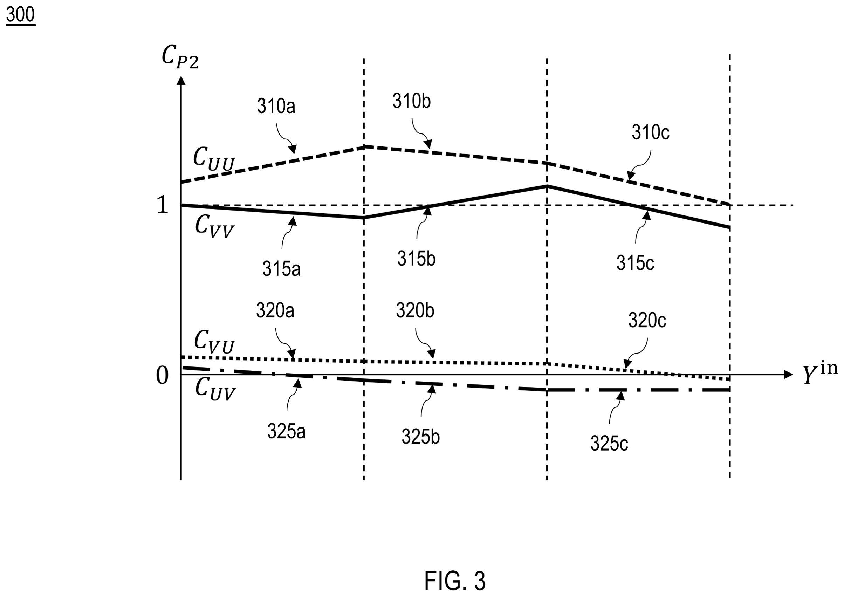

FIG. 3 illustrates an example of piece-wise linear chroma transform *C_{P2},* in accordance with various embodiments. As discussed above, the chroma transform *C*_{*P*2} includes 2 × 2 matrices, and the 2 × 2 matrices of the chroma transform *C*_{*P*2} can be interpolated linearly. As shown in FIG. 3, the diagonal elements of the 2 × 2 matrices can be approximately one and the off-diagonal elements can be close to zero. The *C_{UU}* element includes line segments 310a, 310b, and 310c, which are all slightly above one. The *C_{VV}* element includes line segments 315a, 315b, and 315c, which are all right around one. The *C_{VU}* element includes line segments 320a, 320b, and 320c, which are generally slightly above zero. The *C_{UV}* element includes line segments 325a, 325b, and 325c, which are generally slightly below zero.

In various implementations, there are fewer segments in the chroma transform *C_{P2}* than in the luminosity gain function *g_{P1}.* However, in some embodiments, the chroma transform *C_{P2}* can have a similar number of segments as the luminosity gain function *g_{P1},* and in some embodiments, the chroma transform *C_{P2}* can have more segments than the luminosity gain function *g_{P1}.*

In various implementations, one component of radiometric compensation includes estimating the dynamic parameters *P={P1,P2}* of the pixel-transformation. In some examples, when the operators *g_{P2}* and *C_{P2}* are piecewise-linear in *Y*, the parameters *P={P1,P2}* can be determined using low computational cost estimation methods based on regression techniques such as least-squares regression and other variants. In some examples, when the operators *g_{P1}* and *C_{P2}* are piecewise-linear in *Y*, the parameters *P={P1,P2}* can be determined based random sampling and consensus techniques.

When two consecutive frames from an industry-standard test of camera response to lighting changes are compared following an abrupt change in lighting conditions (*e.g*., a camera flash flashing on), the preprocessing (prior to temporal noise reduction) takes some time to regain steady state. The time it takes for the video images to regain steady state is visible as an oscillation in brightness over time when the flash flashes on, and as a difference in brightness between a previous image and a current image. Until steady state is regained, temporal denoising is not possible since the previous frame appears to represent different information (*e.g*., a different scene) due to the differences in brightness and color. More generally, the efficacy of temporal denoising in dynamic environments, where the camera and the light sources change constantly, may deteriorate due to such changes. The systems and methods provided herein include radiometric correction which can remedy any deterioration in temporal denoising due to camera and lighting changes.

In particular, by applying radiometric compensation to the previous image, the previous image becomes more similar to the current image, thereby enabling effective temporal denoising of the current image.

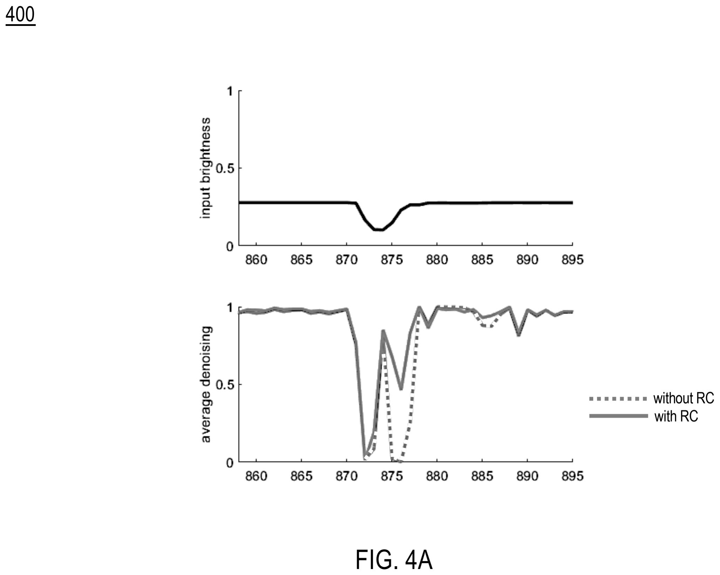

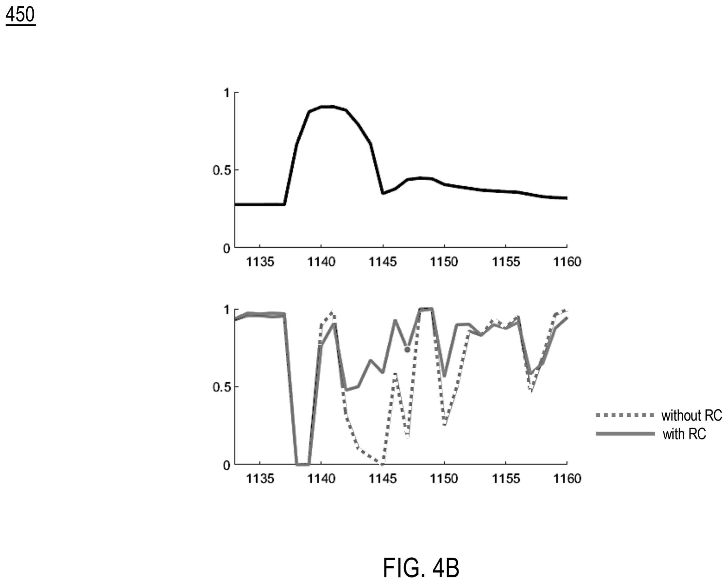

FIGS. 4A and 4B illustrate temporal denoising in response to a change in brightness using a TNR without radiometric compensation and using TNR with radiometric compensation, in accordance with various embodiments. In FIG. 4A, the horizontal axis is the frame index, which is equivalent to a time index. The top graph shows the average brightness of each frame at the input to the TNR. In particular, as illustrated in the top graph of FIG. 4A, there is a decrease in brightness from about frame 871 to about frame 873. Then, from about frame 874 to about frame 878, the brightness increases. At about frame 879, the brightness returns to a constant level.

The bottom graph in FIG. 4A shows the average denoising power at each frame, both with and without radiometric compensation. The bottom graph is aligned with the top graph such that the average denoising power can be correlated with the corresponding brightness level at each frame. The dotted line in the bottom graph represents average denoising power without radiometric compensation, while the solid line represents average denoising power with radiometric compensation. As shown in the bottom graph, radiometric compensation contributes to much faster recovery of temporal denoising after the change in brightness. In particular, average denoising power decreases down to zero after frame 871 both with and without radiometric compensation, then increases again around frame 873 both with and without radiometric compensation. Then, without radiometric compensation, average denoising power decreases back down to zero from around frame 874 to around frame 876, and subsequently recovers around frame 878 or frame 879. In contrast, with radiometric compensation, average denoising power decreases only down to about 0.5 from around frame 876, and subsequently recovers around frame 878 or frame 879. Thus, average denoising power is substantially improved with radiometric compensation.

In FIG. 4B, the horizontal axis is the frame index, which is equivalent to a time index. The top graph shows the average brightness of each frame at the input to the TNR. In particular, as illustrated in the top graph of FIG. 4A, there is an increase in brightness from about frame 1137 to about frame 1141. Then, from about frame 1142 to about frame 1145, the brightness decreases. At about frame 1146, the brightness returns to a near constant level.

The bottom graph in FIG. 4B shows the average denoising power at each frame, both with and without radiometric compensation. The bottom graph is aligned with the top graph such that the average denoising power can be correlated with the corresponding brightness level at each frame. The dotted line in the bottom graph represents average denoising power without radiometric compensation, while the solid line represented average denoising power with radiometric compensation. As shown in the bottom graph, radiometric compensation contributes to much faster recovery of temporal denoising after the change in brightness. In particular, average denoising power decreases down to zero after frame 1137 both with and without radiometric compensation, then increases again around frame 1138 both with and without radiometric compensation. Then, without radiometric compensation, average denoising power begins to decrease again around frame 1142, plummeting back down to zero around frame 1145. Without radiometric compensation, average denoising power repeatedly dips down below 0.5 until around frame 1153, and subsequently recovers around frame 1160. In contrast, with radiometric compensation, average denoising power begins to decrease around frame 1142, but reaches a minimum of around 0.5 around frame 1143, and does not dip below 0.5 again, continually outperforming denoising without radiometric compensation. With radiometric compensation, average denoising power subsequently recovers around frame 1160. Thus, average denoising power is substantially improved with radiometric compensation.

### Example Method for Temporal Noise Reduction with Radiometric Compensation

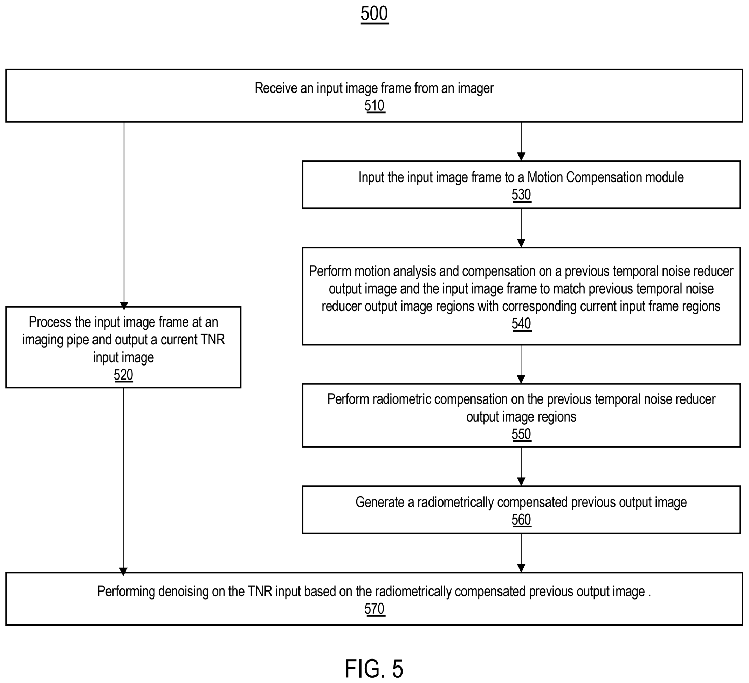

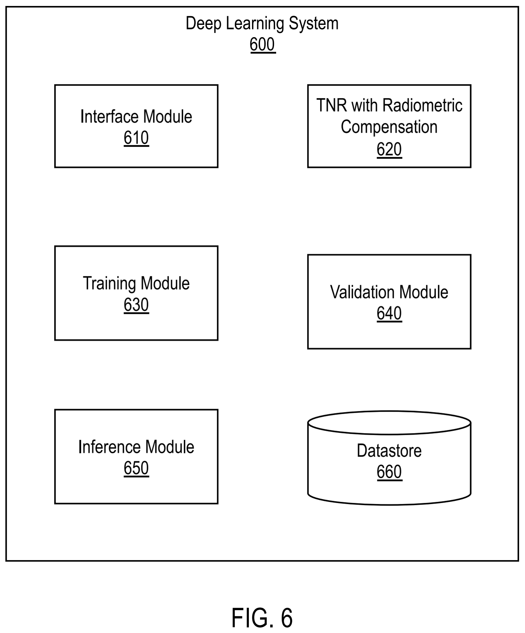

FIG. 5 is a flowchart showing a method 500 for temporal noise reduction of images with radiometric compensation, in accordance with various embodiments. The method 500 may be performed by the image processing system 100 of FIG. 1, and/or by the deep learning system 600 in FIG. 6. Although the method 500 is described with reference to the flowchart illustrated in FIG. 5, other methods for TNR may alternatively be used. For example, the order of execution of the steps in FIG. 5 may be changed. As another example, some of the steps may be changed, eliminated, or combined.

At step 510, an input image frame is received from an imager at an image processing system. The input image frame is a raw image and can be a frame of a video stream. At step 520, the image is pre-processed with various image processing techniques such as color and luma manipulations (e.g., global tone mapping, local tone mapping, gamma, white balancing (WB), color correction matrices (CCM), shading correction, and so on).

At step 530, the input image frame is input to a Motion Compensation module. The Motion Compensation module also receives a previous Temporal Noise Reducer output for the previous image frame. In some examples, the previous TNR output for the previous image frame is stored in a memory, and the Motion compensation module receives the previous TNR output for the previous image frame from the memory. At step 540, motion analysis is performed on the previous temporal noise reducer output image and the input image frame. In particular, the Motion Compensation module matches regions of the previous temporal noise reducer output image with corresponding current input frame regions.

At step 550, radiometric compensation is performed on the regions of the previous output image on which motion compensation was performed. In particular, the lighting of the regions is adjusted based on the lighting of the corresponding current input frame regions. In some examples, a Radiometric Compensation Module adjusts the lighting of the regions of the previous output image on which motion compensation was performed. Adjusting the lighting can include adjusting the luminance and/or chrominance of the regions of the previous output image. Additionally, adjusting the lighting can include adjusting brightness, tone, hue, tint, and/or any other radiometric component. Radiometric compensation can be performed as described above with respect to FIGS. 1-4B. At step 560, a radiometrically compensated previous output image is generated. In some examples, a Radiometric Compensation Module generates the radiometrically compensated previous output image. In various examples, steps 530, 540, 550, and 560 are performed in parallel to step 520.

At step 570, denoising is performed on the current TNR input image (from step 520) based on the radiometrically compensated previous output image (from step 560). In particular, a TNR receives the current TNR input image (the pre-processed current frame) and the radiometrically compensated previous output image, and performs noise reduction on the current TNR input image to generate a current output image.

### Example DNN System for TNR

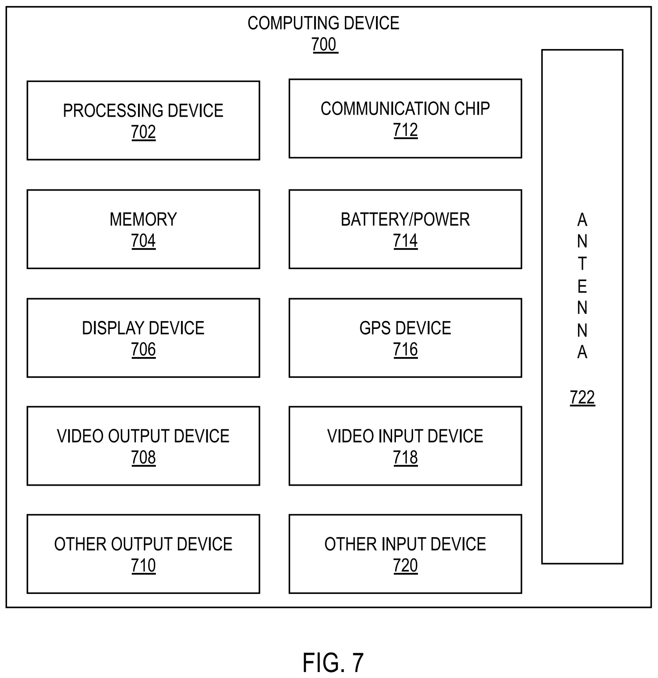

FIG. 6 is a block diagram of an example DNN system 600, in accordance with various embodiments. The DNN system 600 trains DNNs for various tasks, including temporal noise reduction of video streams. The DNN system 600 includes an interface module 610, a TNR with Radiometric Compensation 620, a training module 630, a validation module 640, an inference module 650, and a datastore 660. In other embodiments, alternative configurations, different or additional components may be included in the DNN system 600. Further, functionality attributed to a component of the DNN system 600 may be accomplished by a different component included in the DNN system 600 or a different system. The DNN system 600 or a component of the DNN system 600 (e.g., the training module 630 or inference module 650) may include the computing device 700 in FIG. 7.

The interface module 610 facilitates communications of the DNN system 600 with other systems. As an example, the interface module 610 supports the DNN system 600 to distribute trained DNNs to other systems, e.g., computing devices configured to apply DNNs to perform tasks. As another example, the interface module 610 establishes communications between the DNN system 600 with an external database to receive data that can be used to train DNNs or input into DNNs to perform tasks. In some embodiments, data received by the interface module 610 may have a data structure, such as a matrix. In some embodiments, data received by the interface module 610 may be an image, a series of images, and/or a video stream.

The temporal noise reducer (TNR) with radiometric compensation 620 performs temporal noise reduction on video images. In some examples, the TNR with radiometric compensation 620 performs temporal noise reduction on real-world videos. In general, the TNR includes a Motion Compensation module and a Radiometric Compensation module. The Motion Compensation module receives the previous TNR output and the current input image, and identifies moving objects in the previous TNR output. The Radiometric Compensation module adjusts the lighting of the moving objects in the previous image to more closely match the lighting of the objects in the current input image, and the radiometrically compensated previous image is input to the TNR. In some examples, the input to the TNR is a current input frame and a previous output frame, where a previous output frame is processed by the Motion Compensation Module and the Radiometric Compensation module. During training, the TNR with radiometric compensation 620 can use both past and future video images. In general, the frames of a video feed have a sequence in which the frames were captured, and the sequence can be considered sequentially (from older frames to newer frames) in time-forward order.

The training module 630 trains DNNs by using training datasets. In some embodiments, a training dataset for training a DNN may include one or more images and/or videos, each of which may be a training sample. In some examples, the training module 630 trains the TNR with radiometric compensation 620. The training module 630 may receive real-world video data for processing with the TNR with radiometric compensation 620 as described herein. In some embodiments, the training module 630 may input different data into different layers of the DNN. For every subsequent DNN layer, the input data may be less than the previous DNN layer. The training module 630 may adjust internal parameters of the DNN to minimize a difference between the video processed by the DNN with time-forward temporal noise reduction at the TNR with radiometric compensation 620 and the video processed by the DNN with time-reversal temporal noise reduction at the TNR with radiometric compensation 620. In some examples, the TNR with radiometric compensation 620 can be trained with labeled ground truth images. In some examples, the difference between TNR with radiometric compensation 620 output frames and the corresponding groundtruth images can be measured as the number of pixels in the corresponding image frames that are different from each other. In some examples, the difference between corresponding image frames can be measured using a loss function.

In some embodiments, a part of the training dataset may be used to initially train the DNN, and the rest of the training dataset may be held back as a validation subset used by the validation module 640 to validate performance of a trained DNN. The portion of the training dataset not including the tuning subset and the validation subset may be used to train the DNN.

The training module 630 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 1, 10, 50, 100, or even larger.

The training module 630 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully connected layers, normalization layers, softmax or logistic layers, and so on. The convolutional layers of the DNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between 2 convolution layers. A fully connected layer involves weights, biases, and neurons. It connects neurons in one layer to neurons in another layer. It is used to classify images between different categories by training.

In the process of defining the architecture of the DNN, the training module 630 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 630 defines the architecture of the DNN, the training module 630 inputs a training dataset into the DNN. The training dataset includes a plurality of training samples. An example of a training dataset includes a series of images of a video stream. Unlabeled, real-world video is input to the TNR, and processed using the TNR parameters of the DNN to produce two different model-generated outputs: a first time-forward model-generated output and a second time-reversed model-generated output. In the backward pass, the training module 630 modifies the parameters inside the DNN ("internal parameters of the DNN") to minimize the differences between the first model-generated output is and the second model generated output. The internal parameters include weights of filters in the convolutional layers of the DNN. In some embodiments, the training module 630 uses a cost function to minimize the differences.

The training module 630 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 630 finishes the predetermined number of epochs, the training module 630 may stop updating the parameters in the DNN. The DNN having the updated parameters is referred to as a trained DNN.

The validation module 640 verifies accuracy of trained DNNs. In some embodiments, the validation module 640 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 640 may determine an accuracy score measuring the precision, recall, or a combination of precision and recall of the DNN. The validation module 640 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 640 may compare the accuracy score with a threshold score. In an example where the validation module 640 determines that the accuracy score of the augmented model is lower than the threshold score, the validation module 640 instructs the training module 630 to re-train the DNN. In one embodiment, the training module 630 may iteratively re-train the DNN until the occurrence of a stopping condition, such as the accuracy measurement indication that the DNN may be sufficiently accurate, or a number of training rounds having taken place.

The inference module 650 applies the trained or validated DNN to perform tasks. The inference module 650 may run inference processes of a trained or validated DNN. In some examples, inference makes use of the forward pass to produce model-generated output for unlabeled real-world data. For instance, the inference module 650 may input real-world data into the DNN and receive an output of the DNN. The output of the DNN may provide a solution to the task for which the DNN is trained for.

The inference module 650 may aggregate the outputs of the DNN to generate a final result of the inference process. In some embodiments, the inference module 650 may distribute the DNN to other systems, e.g., computing devices in communication with the DNN system 600, for the other systems to apply the DNN to perform the tasks. The distribution of the DNN may be done through the interface module 610. In some embodiments, the DNN system 600 may be implemented in a server, such as a cloud server, an edge service, and so on. The computing devices may be connected to the DNN system 600 through a network. Examples of the computing devices include edge devices.

The datastore 660 stores data received, generated, used, or otherwise associated with the DNN system 600. For example, the datastore 660 stores video processed by the TNR WITH RADIOMETRIC COMPENSATION 620 or used by the training module 630, validation module 640, and the inference module 650. The datastore 660 may also store other data generated by the training module 630 and validation module 640, such as the hyperparameters for training DNNs, internal parameters of trained DNNs (e.g., values of tunable parameters of activation functions, such as Fractional Adaptive Linear Units (FALUs)), etc. In the embodiment of FIG. 6, the datastore 660 is a component of the DNN system 600. In other embodiments, the datastore 660 may be external to the DNN system 600 and communicate with the DNN system 600 through a network.

In general, an uncalibrated or badly calibrated TNR would fail to discriminate between similar and dissimilar regions in the frames of the current input and the previous output. Similarly, an uncalibrated or badly calibrated TNR would fail to discriminate between similar and dissimilar regions in the frames of FIGS. 4A and 4B. When a moving object is blended with the background, a ghost artifact appears in the output frame (i.e., in the output video). In particular, a ghost artifact appears when pixels of the moving foreground object are blended with the background pixels, making the moving object appear transparent. When the current input is blended with the previous output, the ghost artifact trails behind the moving object.

For TNR training, the input can include an input image frame and a labeled groundtruth TNR-processed image. In various examples, the input image frame is received at a temporal noise reducer such as the TNR of image processing systems 100, 200, or the TNR with radiometric compensation 620. In other examples, the input image frame can be received at the training module 630 or the inference module 650 of FIG. 6. The imager can be a camera, such as a video camera. The input image frame can be a still image from the video camera feed. The input image frame can include a matrix of pixels, each pixel having a color, lightness, and/or other parameter. The input image frame can be downscaled and processed by the motion analysis block, and the input image frame can be simultaneously processed (in parallel) by an image processing pipe. The output from the motion analysis block and the output from the image processing pipe can be input to a blending module, which can also retrieve previous output image from a memory. The blending module can remove noise from the processed input image and generate a clean output image. Temporal noise reduction parameters, such as blend factors, are adjusted to minimize a loss function between the clean output image and the labeled groundtruth TNR-processed image. Various steps can be repeated to further adjust the TNR parameters. In some examples, the training can be repeated with a new input image frame and groundtruth TNR-processed image. In some examples, the motion analysis block can be trained using downscaled input images and comparing motion analysis block motion map outputs to groundtruth motion maps. Similarly, in some examples, the blending module can be trained using processed TNR input images and downscaled motion maps, and comparing blending module clean processed output images to groundtruth clean processed output images.

### Example Computing Device

FIG. 7 is a block diagram of an example computing device 700, in accordance with various embodiments. In some embodiments, the computing device 700 may be used for at least part of the temporal noise reduction system 100 of FIG. 1 and/or the deep learning system 600 in FIG. 6. A number of components are illustrated in FIG. 7 as included in the computing device 700, but any one or more of these components may be omitted or duplicated, as suitable for the application. In some embodiments, some or all of the components included in the computing device 700 may be attached to one or more motherboards. In some embodiments, some or all of these components are fabricated onto a single system on a chip (SoC) die. Additionally, in various embodiments, the computing device 700 may not include one or more of the components illustrated in FIG. 7, but the computing device 700 may include interface circuitry for coupling to the one or more components. For example, the computing device 700 may not include a display device 706, but may include display device interface circuitry (e.g., a connector and driver circuitry) to which a display device 706 may be coupled. In another set of examples, the computing device 700 may not include a video input device 718 or a video output device 708, but may include video input or output device interface circuitry (e.g., connectors and supporting circuitry) to which a video input device 718 or video output device 708 may be coupled.

The computing device 700 may include a processing device 702 (e.g., one or more processing devices). The processing device 702 processes electronic data from registers and/or memory to transform that electronic data into other electronic data that may be stored in registers and/or memory. The computing device 700 may include a memory 704, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 704 may include memory that shares a die with the processing device 702. In some embodiments, the memory 704 includes one or more non-transitory computer-readable media storing instructions executable for occupancy mapping or collision detection, e.g., the method 500 described above in conjunction with FIG. 5, some of the operations performed by the temporal noise reduction system 100 of FIG. 1, and/or some operations performed by the DNN system 600 in FIG. 6. The instructions stored in the one or more non-transitory computer-readable media may be executed by the processing device 702.

In some embodiments, the computing device 700 may include a communication chip 712 (e.g., one or more communication chips). For example, the communication chip 712 may be configured for managing wireless communications for the transfer of data to and from the computing device 700. The term "wireless" and its derivatives may be used to describe circuits, devices, systems, methods, techniques, communications channels, etc., that may communicate data using modulated electromagnetic radiation through a nonsolid medium. The term does not imply that the associated devices do not contain any wires, although in some embodiments they might not.

The communication chip 712 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 712 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 712 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 712 may operate in accordance with code-division multiple access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 712 may operate in accordance with other wireless protocols in other embodiments. The computing device 700 may include an antenna 722 to facilitate wireless communications and/or to receive other wireless communications (such as AM or FM radio transmissions).

In some embodiments, the communication chip 712 may manage wired communications, such as electrical, optical, or any other suitable communication protocols (e.g., the Ethernet). As noted above, the communication chip 712 may include multiple communication chips. For instance, a first communication chip 712 may be dedicated to shorter-range wireless communications such as Wi-Fi or Bluetooth, and a second communication chip 712 may be dedicated to longer-range wireless communications such as global positioning system (GPS), EDGE, GPRS, CDMA, WiMAX, LTE, EV-DO, or others. In some embodiments, a first communication chip 712 may be dedicated to wireless communications, and a second communication chip 712 may be dedicated to wired communications.

The computing device 700 may include battery/power circuitry 714. The battery/power circuitry 714 may include one or more energy storage devices (e.g., batteries or capacitors) and/or circuitry for coupling components of the computing device 700 to an energy source separate from the computing device 700 (e.g., AC line power).

The computing device 700 may include a display device 706 (or corresponding interface circuitry, as discussed above). The display device 706 may include any visual indicators, such as a heads-up display, a computer monitor, a projector, a touchscreen display, a liquid crystal display (LCD), a light-emitting diode display, or a flat panel display, for example.

The computing device 700 may include a video output device 708 (or corresponding interface circuitry, as discussed above). The video output device 708 may include any device that generates an audible indicator, such as speakers, headsets, or earbuds, for example.

The computing device 700 may include a video input device 718 (or corresponding interface circuitry, as discussed above). The video input device 718 may include any device that generates a signal representative of a sound, such as microphones, microphone arrays, or digital instruments (e.g., instruments having a musical instrument digital interface (MIDI) output).

The computing device 700 may include a GPS device 716 (or corresponding interface circuitry, as discussed above). The GPS device 716 may be in communication with a satellite-based system and may receive a location of the computing device 700, as known in the art.

The computing device 700 may include another output device 710 (or corresponding interface circuitry, as discussed above). Examples of the other output device 710 may include a video codec, a video codec, a printer, a wired or wireless transmitter for providing information to other devices, or an additional storage device.

The computing device 700 may include another input device 720 (or corresponding interface circuitry, as discussed above). Examples of the other input device 720 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 700 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 700 may be any other electronic device that processes data.

### Selected Examples

The following paragraphs provide various examples of the embodiments disclosed herein.

Example 1 provides a computer-implemented method, including receiving an input frame of a video stream from an imager, where the input frame is a raw image; processing the input frame at an imaging pipe and generating a temporal noise reducer current input image for inputting to a temporal noise reducer; performing motion compensation on a previous temporal noise reducer output image and the input frame to match previous temporal noise reducer output image regions with corresponding current input frame regions; adjusting lighting of the previous temporal noise reducer output image regions based on the corresponding current input frame regions to generate a radiometrically compensated previous output image; and denoising the temporal noise reducer current input image based on the radiometrically compensated previous output image.

Example 2 provides the computer-implemented method of example 1, where adjusting the lighting of the previous temporal noise reducer output image regions includes adjusting luminosity of the previous temporal noise reducer output image regions.

Example 3 provides the computer-implemented method of example 2, wherein adjusting the luminosity includes adjusting the luminosity of the previous temporal noise reducer output image regions to an adjusted luminosity similar to a luminosity of the similar current input frame regions.

Example 4 provides the computer-implemented method according to any of examples 2-3, where adjusting luminosity of the previous temporal noise reducer output image regions includes adjusting luminosity based on a piecewise-linear gain function.

Example 5 provides the computer-implemented method according to any of examples 1-4, where adjusting the lighting of the previous temporal noise reducer output image regions includes adjusting chrominance of the previous temporal noise reducer output image regions.

Example 6 provides the computer-implemented method of example 5, wherein adjusting the chrominance includes adjusting the chrominance of the previous temporal noise reducer output image regions to an adjusted chrominance similar to a chrominance of the similar current input frame regions.

Example 7 provides the computer-implemented method according to any of examples 5-6, where the chrominance is represented by two color components, and is dependent on a luminosity of the corresponding current input frame regions.

Example 8 provides the computer-implemented method according to any of examples 5-7, where adjusting chrominance of the previous temporal noise reducer output image regions includes adjusting chrominance based on a piecewise-linear chroma transform.

Example 9 provides the computer-implemented method according to example 8, where the piecewise-linear chroma transform includes matrices based on the two color components.

Example 10 provides the computer-implemented method according to any of examples 1-9, where denoising includes blending pixels of the temporal noise reducer current input image with corresponding pixels in the radiometrically compensated previous output image, where an amount of blending is based on a blend ratio.

Example 11 provides one or more non-transitory computer-readable media storing instructions executable to perform operations, the operations including receiving an input frame of a video stream from an imager, where the input frame is a raw image; processing the input frame at an imaging pipe and generating a temporal noise reducer current input image for inputting to a temporal noise reducer; performing motion compensation on a previous temporal noise reducer output image and the input frame to match previous temporal noise reducer output image regions with corresponding current input frame regions; adjusting lighting of the previous temporal noise reducer output image regions based on the corresponding current input frame regions to generate a radiometrically compensated previous output image; and denoising the temporal noise reducer current input image based on the radiometrically compensated previous output image.

Example 12 provides the one or more non-transitory computer-readable media according to example 11, where adjusting the lighting of the previous temporal noise reducer output image regions includes adjusting luminosity of the previous temporal noise reducer output image regions.

Example 13 provides the one or more non-transitory computer-readable media according to example 12, wherein adjusting the luminosity includes adjusting the luminosity of the previous temporal noise reducer output image regions to an adjusted luminosity similar to a luminosity of the similar current input frame regions.

Example 14 provides the one or more non-transitory computer-readable media according to any of examples 12-13, where adjusting luminosity of the previous temporal noise reducer output image regions includes adjusting luminosity based on a piecewise-linear gain function.

Example 15 provides the one or more non-transitory computer-readable media according to any of examples 11-14, where adjusting the lighting of the previous temporal noise reducer output image regions includes adjusting chrominance of the previous temporal noise reducer output image regions.

Example 16 provides the one or more non-transitory computer-readable media according to example 15, wherein adjusting the chrominance includes adjusting the chrominance of the previous temporal noise reducer output image regions to an adjusted chrominance similar to a chrominance of the similar current input frame regions.

Example 17 provides the one or more non-transitory computer-readable media according to any of examples 15-16, where the chrominance is represented by two color components, and is dependent on a luminosity of the corresponding current input frame regions.

Example 18 provides the one or more non-transitory computer-readable media according to example 73, where adjusting chrominance of the previous temporal noise reducer output image regions includes adjusting chrominance based on a piecewise-linear chroma transform.

Example 19 provides the one or more non-transitory computer-readable media according to example 18, where the piecewise-linear chroma transform includes matrices based on the two color components.

Example 19 provides the one or more non-transitory computer-readable media according to any of examples 11-18, where denoising includes blending pixels of the temporal noise reducer current input image with corresponding pixels in the radiometrically compensated previous output image, where an amount of blending is based on a blend ratio.

Example 20 provides an apparatus, including a computer processor for executing computer program instructions; and a non-transitory computer-readable memory storing computer program instructions executable by the computer processor to perform operations including receiving an input frame of a video stream from an imager, where the input frame is a raw image; processing the input frame at an imaging pipe and generating a temporal noise reducer current input image for inputting to a temporal noise reducer; performing motion compensation on a previous temporal noise reducer output image and the input frame to match previous temporal noise reducer output image regions with corresponding current input frame regions; adjusting lighting of the previous temporal noise reducer output image regions based on the corresponding current input frame regions to generate a radiometrically compensated previous output image; and denoising the temporal noise reducer current input image based on the radiometrically compensated previous output image.

Example 21 provides the apparatus according to example 20, where adjusting the lighting of the previous temporal noise reducer output image regions includes adjusting luminosity of the previous temporal noise reducer output image regions. *To make more similar to a luminosity of the similar current input frame regions*

Example 22 provides the apparatus according to example 21, where adjusting luminosity of the previous temporal noise reducer output image regions includes adjusting luminosity based on a piecewise-linear gain function.

Example 23 provides the apparatus according to any of examples 20-22, where adjusting the lighting of the previous temporal noise reducer output image regions includes adjusting chrominance of the previous temporal noise reducer output image regions.

Example 24 provides the apparatus according to example 23, where the chrominance is represented by two color components, and is dependent on a luminosity of the corresponding current input frame regions.

Example 25 provides the apparatus according to example 24, where adjusting chrominance of the previous temporal noise reducer output image regions includes adjusting chrominance based on a piecewise-linear chroma transform.

Example 26 provides the apparatus according to example 25, where the piecewise-linear chroma transform includes matrices based on the two color components.

Example 27 provides the apparatus according to any of examples 20-26, where denoising includes blending pixels of the temporal noise reducer current input image with corresponding pixels in the radiometrically compensated previous output image, where an amount of blending is based on a blend ratio.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

## Claims

1. A computer-implemented method, comprising:
receiving an input frame of a video stream from an imager, wherein the input frame is a raw image;
processing the input frame at an imaging pipe and generating a temporal noise reducer current input image for inputting to a temporal noise reducer;
performing motion compensation on a previous temporal noise reducer output image and the input frame to match previous temporal noise reducer output image regions with corresponding current input frame regions;
adjusting lighting of the previous temporal noise reducer output image regions based on the corresponding current input frame regions to generate a radiometrically compensated previous output image; and
denoising the temporal noise reducer current input image based on the radiometrically compensated previous output image.

2. The computer-implemented method of claim 1, wherein adjusting the lighting of the previous temporal noise reducer output image regions includes adjusting luminosity of the previous temporal noise reducer output image regions.

3. The computer-implemented method of claim 2, wherein adjusting luminosity of the previous temporal noise reducer output image regions includes adjusting luminosity based on a piecewise-linear gain function.

4. The computer-implemented method of claims 1-3, wherein adjusting the lighting of the previous temporal noise reducer output image regions includes adjusting chrominance of the previous temporal noise reducer output image regions.

5. The computer-implemented method of claim 4, wherein the chrominance is represented by two color components, and is dependent on a luminosity of the corresponding current input frame regions.

6. The computer-implemented method of claim 5, wherein adjusting chrominance of the previous temporal noise reducer output image regions includes adjusting chrominance based on a piecewise-linear chroma transform.

7. The computer-implemented method of claim 5, wherein the piecewise-linear chroma transform includes 2 × 2 matrices based on the two color components.

8. The computer-implemented method of claims 1-7, wherein denoising includes blending pixels of the temporal noise reducer current input image with corresponding pixels in the radiometrically compensated previous output image, wherein an amount of blending is based on a blend ratio.

9. One or more non-transitory computer-readable media storing instructions executable to perform operations, the operations comprising:
receiving an input frame of a video stream from an imager, wherein the input frame is a raw image;
processing the input frame at an imaging pipe and generating a temporal noise reducer current input image for inputting to a temporal noise reducer;
performing motion compensation on a previous temporal noise reducer output image and the input frame to match previous temporal noise reducer output image regions with corresponding current input frame regions;
adjusting lighting of the previous temporal noise reducer output image regions based on the corresponding current input frame regions to generate a radiometrically compensated previous output image; and
denoising the temporal noise reducer current input image based on the radiometrically compensated previous output image.

10. The one or more non-transitory computer-readable media according to claim 9, wherein adjusting the lighting of the previous temporal noise reducer output image regions includes adjusting luminosity of the previous temporal noise reducer output image regions.

11. An apparatus, comprising:
a computer processor for executing computer program instructions; and
a non-transitory computer-readable memory storing computer program instructions executable by the computer processor to perform operations comprising:
receiving an input frame of a video stream from an imager, wherein the input frame is a raw image;
processing the input frame at an imaging pipe and generating a temporal noise reducer current input image for inputting to a temporal noise reducer;
performing motion compensation on a previous temporal noise reducer output image and the input frame to match previous temporal noise reducer output image regions with corresponding current input frame regions;
adjusting lighting of the previous temporal noise reducer output image regions based on the corresponding current input frame regions to generate a radiometrically compensated previous output image; and
denoising the temporal noise reducer current input image based on the radiometrically compensated previous output image.

12. The apparatus according to claim 11, wherein adjusting the lighting of the previous temporal noise reducer output image regions includes adjusting luminosity of the previous temporal noise reducer output image regions.

13. The apparatus according to claim 12, wherein adjusting luminosity of the previous temporal noise reducer output image regions includes adjusting luminosity based on a piecewise-linear gain function.

14. The apparatus according to claims 11-13, wherein adjusting the lighting of the previous temporal noise reducer output image regions includes adjusting chrominance of the previous temporal noise reducer output image regions.

15. The apparatus according to claim 14, wherein the chrominance is represented by two color components, and is dependent on a luminosity of the corresponding current input frame regions.
